# EUROPÄISCHE PATENTANMELDUNG

(11) **EP 2 469 318 A2**
(43) Veröffentlichungstag der Anmeldung: **27.06.2012**
(21) Anmeldenummer: 11195356.8
(22) Anmeldetag: 22.12.2011
(51) Int. Cl.: G02B 7/10, G02B 23/00, G02B 23/02

(54) **Teleskop mit miteineinander verbindbaren Modulen**

(30) Priorität: 23.12.2010 AT 21322010
(71) Anmelder: Swarovski-Optik KG., 6067 Absam (AT)
(72) Erfinder: Miller, Benno, 6020 Innsbruck (AT); Pernstich, Ludwig, 6063 Rum (AT); Roider, Konrad A., 6068 Mils (AT)
(74) Vertreter: Burger, Hannes

(57) **Zusammenfassung**

Ein Teleskop (1), welches aus miteinander verbindbaren Modulen (2, 3) aufgebaut ist, wobei das Teleskop (1) zumindest aus einem Objektivmodul (2) und einem Okularmodul (3) besteht und das Objektivmodul (2) und das Okularmodul (3) je eine Verbindungsschnittstelle (4, 5) zum Verbinden der Module (2, 3) aufweisen, dadurch gekennzeichnet, dass in das Objektivmodul (2) eine Optik (10) zur Veränderung der Vergrößerung integriert ist.

## Beschreibung

Die Erfindung betrifft ein Teleskop, welches aus miteinander verbindbaren Modulen aufgebaut ist, wobei das Teleskop zumindest aus einem Objektivmodul und einem Okularmodul besteht und das Objektivmodul und das Okularmodul je eine Verbindungsschnittstelle zum Verbinden der Module aufweisen.

Aus der DE9408059U1 ist ein Telesystem zum Betrachten und Photographieren von Objekten in Modulbauweise bekannt geworden. Die bekannte Ausführungsform weist ein Objektiv und eine Bildverwertungseinheit, beispielsweise in Form einer Photokamera auf, welche anstelle eines Okulars verwendet werden kann. Zur Scharfstellung ist eine Scharfstelleinrichtung vorgesehen, wobei zwischen Objektiv und der Scharfstelleinrichtung eine Zentraleinheit angeordnet ist. Die Bildverwertungseinheit ist mit einer auswechselbaren Moduleinheit an der Scharfstelleinrichtung angebracht.

Nachteilig an dem bekannten Aufbau ist vor allem bei größeren Teleskopen, wie sie unter anderem beim Vogelbeobachten eingesetzt werden, dass sich bauartbedingt ein relativ großer Abstand zwischen der Scharfstelleinrichtung, die von einem Objektivmodul durch die Zentraleinheit beabstandet ist, und einem Betätigungsmittel für den Zoom gegeben ist. Hieraus ergibt sich eine relativ schwierige Handhabung des Teleskops, da für eine Veränderung des Zooms mit gleichzeitiger Anpassung der Fokussierung zwei Hände erforderlich sind. Da nicht immer ein entsprechendes Stativ oder eine geeignete Auflage zur Verfügung stehen, kann der Fall eintreten, dass eine gleichzeitige Einstellung von Zoom und Scharfstellung nicht möglich ist. Die dadurch entstehende Zeitverzögerung ist vor allem bei der Wildtierbeobachtung, insbesondere bei der Vogelbeobachtung, sehr störend, da die beobachteten Objekte häufig innerhalb kürzester Zeit ihre Position wechseln können. Abgesehen davon, kann es infolge der unhandlichen Betätigung der Stellmittel von Zoom und Fokussierung zu einem Verwackeln des Teleskops kommen. In Anbetracht der großen Entfernungen, über welche eine Wildtierbeobachtung stattfinden kann, kann bereits ein geringfügiges Verwackeln dazu führen, dass das beobachtete Objekt aus dem Sichtfeld verschwindet.

Es ist daher eine Aufgabe der Erfindung, den Bedienungskomfort eines modularen Teleskops zu erhöhen und durch ein Zoom- und Scharfstellvorgang hervorgerufene subjektive Störungen zu minimieren. Darüber hinaus soll durch die Erfindung die Möglichkeit einer Möglichst guten Zerlegbarkeit des Teleskops geschaffen werden, um ein möglichst geringes Packmaß zu erzielen. Auch soll ein einfacher und möglichst schneller Austausch von Objektiven mit verschiedenen Durchmessern sowie die Möglichkeit eines Nachrüstens mit Okularmodulen mit unterschiedlichen Funktionalitäten ermöglicht werden.

Diese Aufgabe wird mit einem modularen Teleskop der eingangs genannten Art erfindungsgemäß dadurch gelöst, dass eine Optik zur Veränderung der Vergrößerung integriert ist. Gemäß der erfindungsgemäßen Lösung kommt somit als Objektivmodul ein Zoomobjektiv zum Einsatz.

An dieser Stelle sei darauf hingewiesen dass die Begriffe "Zoom" und "Veränderung der Vergrößerung" bzw. "veränderliche "Vergrößerung" synonym gebraucht werden. Gleiches gilt für die Verwendung der Begriffe "Fokussierung" und "Scharfstellen" in diesem Dokument.

Um eine einfache Anpassung der optischen Einstellungen zu ermöglichen kann das Teleskop zumindest ein Stellmittel zum Fokussieren und zumindest ein Stellmittel zum Verändern der Vergrößerung aufweisen.

Das zumindest eine Stellmittel zum Verändern der Vergrößerung kann gemäß einer vorteilhaften Variante der Erfindung am Objektivmodul oder am Okularmodul angeordnet sein, wobei in diesem Fall das zumindest eine Stellmittel zum Fokussieren am Objektivmodul oder am Okularmodul angeordnet sein kann.

Um eine sehr gute Bedienbarkeit zu gewährleisten kann mindestens eines der Stellmittel im Bereich einer der Verbindungsschnittstellen angeordnet sein.

Die Bedienbarkeit und Handhabung des Teleskops lässt sich dadurch weiter verbessern, dass eines der Stellmittel an dem Objektivmodul im Bereich der Verbindungsschnittstelle des Objektivmoduls und das andere der Stellmittel an dem Okularmodul im Bereich der Verbindungsschnittstelle des Okularmoduls angeordnet ist.

Eine Ausführung der Erfindung, welche sich durch eine besonders gute Bedienbarkeit auszeichnet, sieht vor, dass die Stellmittel als Stellringe ausgebildet sind, deren Stirnseiten in zu einer Trenn/Verbindungsebene des Objektivmoduls und des Okularmoduls parallelen Ebenen liegen. Die Verwendung von zueinander parallelen Stellringen ermöglicht eine einhändige Einstellung des Teleskops.

Eine besonders vorteilhafte Weiterbildung der Erfindung sieht vor, dass die Stellmittel zumindest abschnittsweise in einer Trennebene der Verbindungsschnittstellen liegen. Dies ermöglicht eine räumlich besonders nahe Anordnung der Stellmittel zueinander, wodurch die Handhabung weiter erleichtert wird. Werden das Okular- und Objektivmodul direkt miteinander verbunden, so liegen die Stellmittel in einer Trennebene der Verbindungsschnittstellen des Okular- und Objektivmoduls, sodass die Stellmittel gemäß dieser Ausführungsform unmittelbar zueinander benachbart sein können.

Gemäß einer vorteilhaften Variante der Erfindung kann durch zwei miteinander unmittelbar zusammenwirkende Verbindungsschnittstellen je ein Bajonettverschluss gebildet sein. Diese Ausführungsform ermöglicht eine besonders einfache Verbindung der Module. An dieser Stelle sei darauf hingewiesen, dass in dem vorliegenden Zusammenhang unter einem Bajonettverschluss jede Art von Steck/Drehverschluss verstanden wird.

Entsprechend einer ebenfalls sehr günstigen weiteren Ausführungsform der Erfindung können je zwei unmittelbar zusammenwirkende Verbindungsschnittstelle eine Steckverbindung, bilden die durch axiales Verschieben voneinander lösbar ist, wobei zum Lösen zumindest ein mit zumindest einem Betätigungselement zusammenwirkendes und die Verbindungsschnittstellen miteinander verbindendes Haltelement in eine Freigabeposition zurückgedrängt ist. Diese Variante der Erfindung ermöglicht eine sehr einfache Verbindung der einzelnen Module, da hierfür nur eine Translationsbewegung der Verbindungsschnittstellen erforderlich ist.

Eine weitere Variante der Erfindung sieht vor, dass zwei miteinander unmittelbar zusammenwirkende Verbindungsschnittstellen miteinander verschraubbar sind.

Die mechanische Stabilität der Verbindung zwischen den Modulen lässt sich dadurch erhöhen, dass zwei unmittelbar miteinander zusammenwirkende Verbindungsschnittstellen je ein von einer flachen Form abweichendes Oberflächenprofil aufweisen, wobei eine Verbindungsschnittstelle zumindest abschnittsweise in Form eines männlichen Teils und die andere Schnittstelle zumindest abschnittsweise als weiblicher Teil ausgebildet ist.

Ein richtiges Verbinden der Module miteinander lässt sich dadurch überwachen, dass an zumindest einer der Verbindungsschnittstellen zumindest ein Schalter angeordnet ist, der bei korrektem Anschließen der Verbindungsschnittstellen betätigt ist.

Gemäß einer Variante der Erfindung, welche nur die Verwendung von zueinander passenden Originalteilen zulässt, kann es vorgesehen sein, dass mehrere Schalter vorgesehen sind, wobei in einem verbundenen Zustand der Verbindungsschnittstellen eine vorgebbare Kombination der Schalter betätigt ist, wobei eine elektrische Kontaktierung zwischen dem Objektivmodul und dem Okularmodul und/oder eine Datenverbindung zwischen dem Objektivmodul und dem Okularmodul erst bei Betätigung der Schalter in der vorgegebenen Kombination hergestellt ist.

Ein besonders guter Schutz der Schalter lässt sich dadurch erzielen, dass die Schalter als Reed-Schaltkontakte ausgebildet sind. Bei dieser Ausführungsform ist es besonders von Vorteil, dass die Schalter nicht an der Oberfläche der Verbindungsschnittstellen angeordnet sein müssen und folglich von außen unsichtbar sind. Mit den Schaltern zusammenwirkenden Gegenflächen der anderen Verbindungsschnittstelle können mit entsprechenden Magneten, vorzugsweise Permanentmagneten, bestückt sein. Somit können zwei miteinander unmittelbar zusammenwirkende Verbindungsstellen ein Reed-Relais bilden.

Eine besonders vorteilhafte Variante der Erfindung sieht vor, welche sich durch eine Vielzahl von Einsatzmöglichkeiten auszeichnet, sieht vor dass das Okularmodul ein Multifunktionsmodul ist, welches weitere Funktionalitäten, insbesondere einen Entfernungsmessfunktion, eine Fotofunktion, Video oder Nachtsichtfunktion, aufweist.

Gemäß einer vorteilhaften Weiterbildung der Erfindung kann es vorgesehen sein, dass die weiteren Funktionalitäten unter Verwendung des Sichtkanals des Objektivmoduls realisiert sind. Dies hat unter anderem den Vorteil, dass sich mittels auch Informationen in den optischen Strahlengang einblenden und für den Benutzer darstellen lassen. Darüber hinaus lässt sich durch diese Lösung auch eine sehr kompakte Bauweise erzielen.

Eine weitere Variante der Erfindung sieht vor, dass eine Okularoptik in das Okularmodul fix integriert ist. Durch diese Variante der Erfindung kann der Aufbau des Okularmoduls vereinfacht werden.

Weiters kann dass in das Okularmodul eine Einheit zur Bildumkehr integriert sein.

Zum besseren Verständnis der Erfindung wird diese anhand der nachfolgenden Figuren näher erläutert.

Es zeigen jeweils in stark schematisch vereinfachter Darstellung:
- Fig. 1: ein erfindungsgemäßes Teleskop mit voneinander getrennten Objektivmodul und Okularmodul;
- Fig. 2: eine Variante eines erfindungsgemäßen Teleskops mit voneinander getrennten Objektivmodul und Okularmodul;
- Fig. 3: eine weitere Variante eines erfindungsgemäßen Teleskops mit voneinander getrennten Objektivmodul und Okularmodul;
- Fig. 4: eine Variante einer Verbindungsschnittstelle im näheren Detail;
- Fig. 5: eine weitere Variante einer Verbindungsschnittselle im näheren Detail;
- Fig. 6: eine Ausführungsform eines erfindungsgemäßen Teleskops mit zwei Objektiven und einem Binokular;
- Fig. 7: eine Ausführungsform eines erfindungsgemäßen Teleskops mit einem Objektiv und einem Binokular.
- Fig. 8: eine erste Variante eines optischen Aufbau eines erfindungsgemäßen Teleskops;
- Fig. 9: eine zweite Variante eines optischen Aufbaus eines erfindungsgemäßen Teleskops;
- Fig. 10: eine dritte Variante eines optischen Aufbaus eines erfindungsgemäßen Teleskops;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

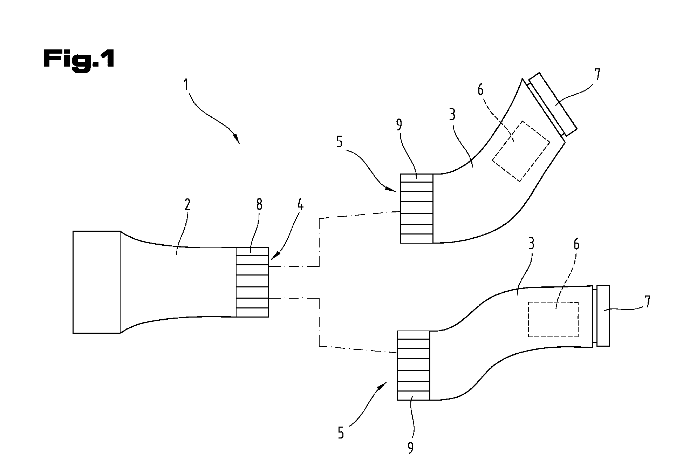

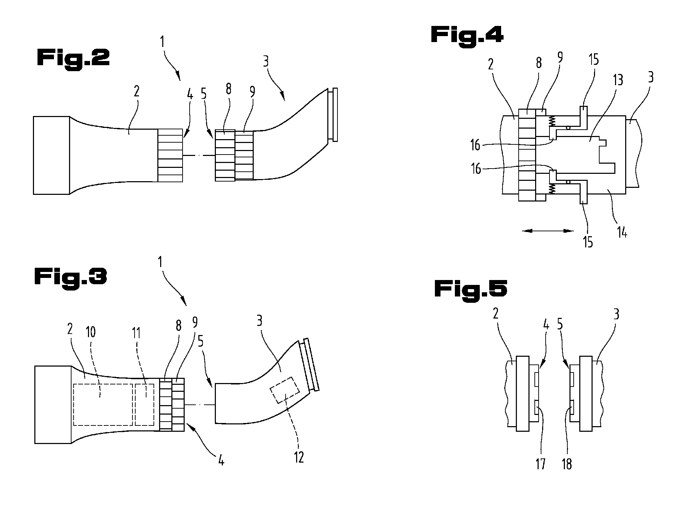

Gemäß Figur 1 weist ein erfindungsgemäßes Teleskop 1 ein Objektivmodul 2 und ein Okularmodul 3 auf. In Fig. 1 sind zwei unterschiedliche Okularmodule 3 dargestellt, die alternativ mit dem Objektivmodul 2 verbunden werden können. Das Objektivmodul 2 und das Okularmodul 3 weisen ihrerseits je eine Verbindungsschnittstelle 4, 5 zum Verbinden der Module 2, 3 auf. Auch wenn die hier dargestellte Variante der Erfindung ein Teleskop 1 mit einem Monokular zeigt, so kann jedoch anstelle eines Okularmoduls 3 mit nur einem Okular auch ein Okularmodul 3 mit einem Binokular zum Einsatz kommen. Weiters können in dem Okularmodul ein Prismenteil und weitere optische Komponenten angeordnet sein. So können in dem Okularmodul 3 beispielsweise eine Einheit 6 zur Bildumkehr und ein Okular 7 mit veränderlicher Vergrößerung integriert sein. Alternativ zur Anordnung eines Okulars 7 mit veränderlicher Vergrößerung in das Okularmodul 3 kann in das Objektivmodul 2 Optik bzw. Einheit zur Veränderung der Vergrößerung integriert sein, wie in Fig. 3 dargestellt. In Fig. 3 ist diese Optik bzw. Einheit mit dem Bezugszeichen 10 versehen.

Das Okular 7 und die Einheit 10 zur Veränderung der Vergrößerung können als eine gemeinsame Einheit ausgeführt sind. Die Einheit 10 kann auch zur Bildumkehr dienen und kann beispielsweise als Prismensystem ausgeführt sein.

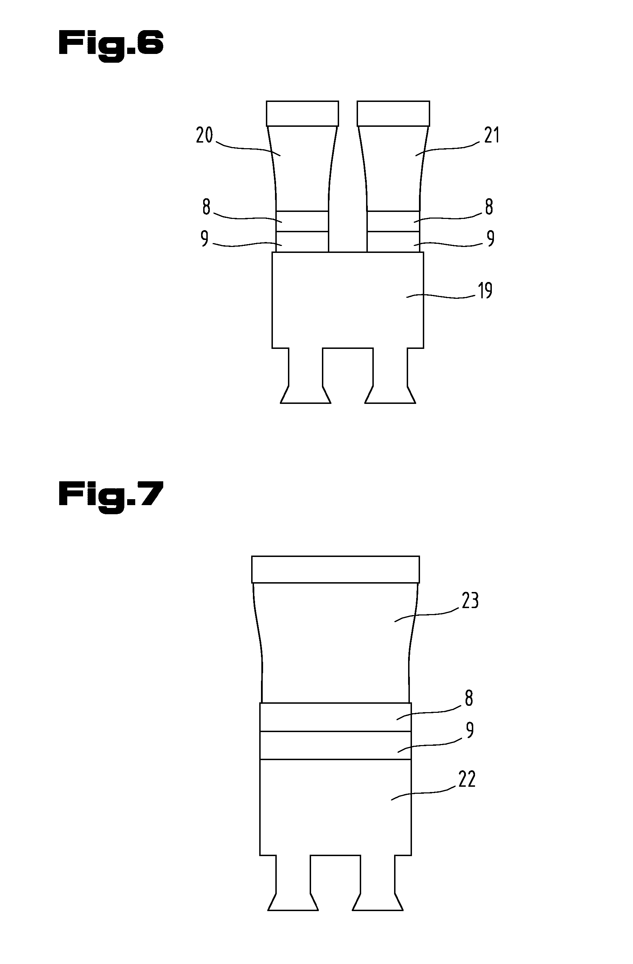

Entsprechend einer Ausführungsform der Erfindung können die Einheit 10 zur Veränderung der Vergrößerung und die Einheit 6 zur Bildumkehr auch als eine gemeinsame Einheit ausgeführt sein. Die gemeinsame Einheit zur Veränderung der Vergrößerung und zur Bildumkehr kann auch als Linsensystem ausgeführt sein, welche ein Bild in einer ersten Zwischenbildebene mit einem veränderlichen Maßstab und umgekehrt in eine zweite Zwischenbildebene abbildet. An den Orten der Zwischenbildebenen kann je eine Strichplatte angeordnet sein (siehe auch die in den Figuren 7 bis 9 dargestellten Ausführungsformen). Auch ist es möglich, dass nur am Ort einer Zwischenbildebene eine Strichplatte angeordnet ist.

Das Objektivmodul 2 kann im Bereich seiner Verbindungsschnittstelle 4 ein Stellmittel 8 zum Zoomen und das Okularmodul 3 im Bereich seiner Verbindungsschnittstelle 5 ein Stellmittel 9 zum Fokussieren aufweisen. Es ist aber auch möglich, dass die Mittel zum Zoomen oder Fokussieren vertauscht angeordnet sind.

Darüber hinaus ist es auch möglich, dass die Stellmittel 8, 9 beide an dem Okularmodul 2 angeordnet sind, wie dies in Fig. 2 dargestellt ist. Dies kann insbesondere dann von Vorteil sein, wenn das Okularmodul 3 ein Okular zum Zoomen und Fokussieren aufweist.

Wie in Fig. 3 dargestellt können die Stellmittel 8 und 9 aber auch an dem Objektivmodul 2 angeordnet sein. Dies ist vor allem dann von Vorteil, wenn in das Objektivmodul 2 eine Optik 10 zur Veränderung der Vergrößerung und eine Optik 11 zum Scharfstellen bzw. Fokussieren integriert sind. Bei dieser Variante der Erfindung ist es von besonderem Vorteil, wenn die Okularoptik in das Okularmodul 3 fix integriert ist.

Die Stellmittel 8, 9 können als Stellringe ausgebildet sein, deren Stirnseiten in zu einer Trenn/Verbindungsebene des Objektivmoduls 2 und des Okularmoduls 3 parallelen Ebenen liegen. Wie den Darstellungen weiters zu entnehmen ist, können die Stellmittel 8, 9 zumindest abschnittsweise in einer Trennebene der Verbindungsschnittstellen 4, 5 liegen. Auch wenn die hier dargestellten Stellmittel 8 und 9 als Stellringe ausgeführt sind, so soll an dieser Stelle darauf hingewiesen werden, dass die Stellmittel 8 und 9 auch als Betätigungsknöpfe oder Tasten ausgeführt sein können.

Gemäß anderen Ausführungen der Erfindung kann das Okularmodul 3 als Multifunktionsmodul ausgebildet sein und Zusatzfunktionen aufweisen. So kann das Okularmodul 3 beispielsweise als Videoaufzeichnungsgerät, digitale digitale Kamera Restlichtverstärker, Infrarotbeleuchtung, Entfernungsmesser, Modul zur optischen Signalaufnahme, Modul zur Einblendung von Informationen und Daten in den visuellen Strahlengang, Modul zur Bildstabilisierung etc. ausgebildet sein. Bei dieser Variante der Erfindung kann es somit vorgesehen sein, dass die weiteren Funktionalitäten unter Verwendung des Sichtkanals des Objektivmodul realisiert sind.

Insbesondere von Vorteil ist es, wenn das Okularmodul 3 eine Einheit 12 zur Einblendung zusätzlicher Daten, insbesondere geographischer Daten, die sich auf den momentanen Aufenthaltsort beziehen, ausgebildet ist. Hierbei kann das Okularmodul 3 oder das Teleskop 1 einen Empfänger eines Positionsermittlungssystems beispielsweise des GPS-Systems aufweisen. Anhand der aktuellen Positionsdaten können in einer Datenbank hinterlegte Informationen eingeblendet werden. Hierzu können Wertebereichen von Geopositionsdaten bestimmte Informationen zugeordnet sein. Die Datenbank kann in einem Speicher des Teleskops 1 oder des Okularmoduls 3 oder in einem über ein Funknetzwerk kontaktierbaren Server abgelegt sein. Ist die Datenbank über ein Funknetzwerk, beispielsweise das GSM-Netz, abfragbar, so kann das Teleskop 1 oder das Okularmodul 3 mit einem entsprechenden Kommunikationsmodul ausgestattet sein. Zusätzlich kann in dem Teleskop 1 oder in dem Okularmodul 3 ein elektronischer Kompass angeordnet sein. Anhand der Daten des elektronischen Kompasses kann ermittelt werden, in welche Richtung das Objektiv des Teleskop 1 gehalten wird. Der ermittelte geographische Standort des Teleskops 1 und die Blickrichtung des Teleskops 1 können dann als Auswahlkriterien zur Einblendung von Daten verwendet werden. So können beispielsweise Namen von Bergen oder anderen geographischen Objekten eingeblendet werden.

Eine Auswahl der einzublendenden Informationen kann auch anhand eines in einen Strahlengang eingeblendeten oder auf einem externen Bildschirm dargestellten Menüs, welches günstigerweise durch ein von außen zugängliches Betätigungselement, wie beispielsweise einem an dem Teleskop 1 oder dem Okularmodul 3 angeordneten Schalter oder einem Stellrad, aufgerufen werden kann.

Weiters sei darauf hingewiesen, dass das Teleskop 1 einen Fortsatz zum Einsetzen in einen entsprechenden Schuh eines Stativs aufweisen kann.

Gemäß einer Variante der Erfindung kann durch zwei unmittelbar miteinander zusammenwirkende Verbindungsschnittstellen 4, 5,je einen Bajonettverschluss gebildet sein.

Entsprechend einer anderen Ausführungsform können die zwei miteinander unmittelbar zusammenwirkenden Verbindungsschnittstellen 4, 5 alternativ zur Ausbildung als Bajonettverschluss miteinander verschraubbar sein, wobei die Verbindungsschnittstellen in diesem Fall miteinander korrespondierende Schraubgewinde aufweisen können.

Wie in Figur 4 dargestellt, können zwei unmittelbar zusammenwirkende Verbindungsschnittstellen 13, 14 auch eine Steckverbindung bilden, die durch axiales Verschieben gelöst werden kann. Zum Lösen der Verbindungsschnittstellen 13, 14 können ein oder mehrere mit einem oder mehreren entsprechenden Betätigungselementen 15 zusammenwirkende Haltelemente 16 in eine Freigabeposition zurückgedrängt werden. Die Haltelemente 16 können als federbelastete Rastnasen ausgebildet sein. Durch Drücken der Betätigungselemente 15, die als Fortsätze der Haltelemente 16 ausgebildet sein können, können die Haltelemente 16 mit entsprechenden Vertiefungen der Verbindungsschnittstelle 13 außer Eingriff gebracht werden. Werden die Betätigungselemente nicht aktiviert, werden die Haltelemente durch die Federkraft in Richtung der Verbindungsschnittstelle 13 bewegt. Die Haltelemente 16 können an der äußeren Verbindungsschnittstelle 14 angeordnet sein. Bei gelösten Halteelementen 16, d.h. bei aktivierten Betätigungselementen 15, können die Verbindungsschnittstellen 13, 14 in axialer Richtung gegeneinander verschoben werden. Die Verschieberichtung ist in Fig. 4 durch einen Doppelpfeil angedeutet. Es sei an dieser Stelle jedoch darauf hingewiesen, dass es noch zahlreiche andere hier nicht explizit angeführte Lösungen gibt, welche eine Kupplung der Verbindungsschnittstellen 13, 14 durch axiales Verschieben ermöglichen.

Weiters können die Verbindungsschnittstellen 13 und 14 je ein von einer flachen Form abweichendes stirnseitiges Oberflächenprofil aufweisen. Hierbei kann eine Verbindungsschnittstelle 13 abschnittsweise in Form eines männlichen Teils und die andere Verbindungsschnittstelle 14 abschnittsweise als weiblicher Teil ausgebildet sein.

Wie in Fig. 6 dargestellt, können an einer der Verbindungsschnittstellen 4, 5 ein oder mehrere Schalter 17 angeordnet sein, die bei einem korrektem Anschließen der Verbindungsschnittstellen 4, 5, betätigt sind. Auf diese Weise lässt sich ein Kontrollsignal generieren, welches auf einer Ausgabeeinheit beispielsweise einer LED, einen korrekten Anschluss der Verbindungsschnittstellen 4 und 5 signalisiert.

Es können aber auch mehrere Schalter 17 vorgesehen sein, wobei in einem verbundenen Zustand der Verbindungsschnittstellen 4 und 5 eine vorgebbare Kombination der Schalter 17 betätigt ist. Eine elektrische Kontaktierung zwischen dem Objektivmodul 2 und dem Okularmodul 3 bzw. die Herstellung einer Datenverbindung zwischen dem Objektivmodul 2 und dem Okularmodul 3 kann davon abhängen, ob die Schalter 17 in der vorgegebenen Kombination betätigt sind. Auf diese Weise lässt sich eine Codierung schaffen, die nur die Verwendung von Originalteilen erlaubt. Die Schalter 17 sind bevorzugterweise als Reed-Schaltkontakte ausgeführt. In diesem Fall können an mit den Schaltern 17 zusammenwirkenden Stellen der Verbindungsschnittstellen 4, 5 Magnete 18 angeordnet sein. Durch ein Verbinden der Verbindungsschnittstellen 4 und 5 können die Schalter 17 durch Einwirkung der Magnetfelder geschlossen werden. Die Schalter 17 können falls sie als Reed-Schaltkontakte ausgebildet sind, auch unter der Oberfläche der jeweiligen Verbindungsschnittstelle 4 oder 5 angeordnet sein, sodass sie von außen nicht sichtbar sind.

Wie in Fig. 6 dargestellt kann das Okularmodul 19 auch als Binokular ausgebildet sein. Um ein stereoskopisches Sehen zu ermöglichen, können in diesem Fall auch zwei Objektivmodule 20, 21 bzw. ein Objektivmodul mit zwei Objektiven verwendet werden. Allerdings ist es, wie in Fig. 7 dargestellt, auch möglich ein Binokular 22 mit einem einzigen Objektivmodul 23 zu verwenden.

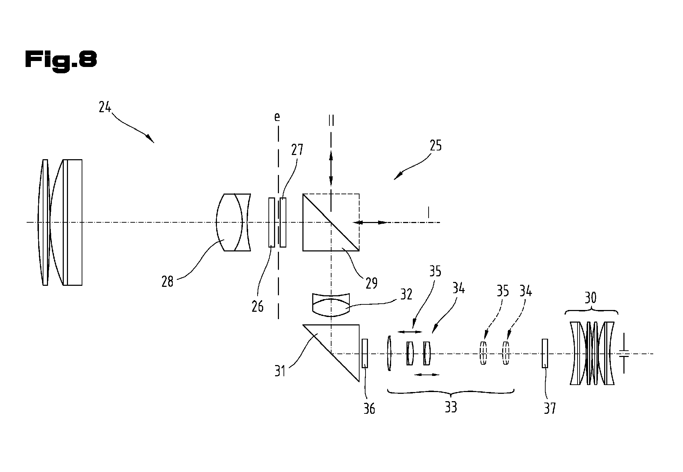

Fig. 8 zeigt beispielhaft einen ersten optischen Aufbau eines erfindungsgemäßen Teleskops. Das Objektivmodul 24 und das Okularmodul 25 können in einer Trennebene e voneinander getrennt werden bzw. sind über ihre Verbindungsschnittstellen in der Trennebene e miteinander verbunden. Das Objektivmodul 24 kann eine verstellbare Linse 28 aufweisen, welche zum Fokussieren dient und über ein Stellmittel zum Fokussieren, beispielsweise eines der oben erwähnten Stellmittel zum Fokussieren, betätigt werden kann.

An den einander zugewandten Enden können das Objektivmodul 24 und das Okularmodul 25 Glasabdeckungen 26, 27 aufweisen. Die Trennung der beiden Module erfolgt zwischen den beiden Glasabdeckungen 27, wobei die Verbindungsschnittstellen, beispielsweise die einen Bajonettverschluss bildenden Verbindungsschnittstellen zwischen den beiden Glasabdeckungen 27 angeordnet sein können.

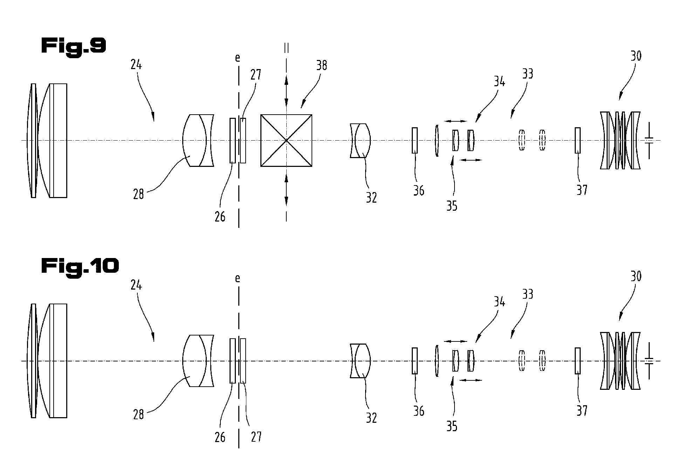

Das erfindungsgemäße Teleskop kann wie in Fig. 8 dargestellt, einen Versatz aufweisen. Natürlich ist es auch möglich, dass das erfindungsgemäße Teleskop, so wie in den Figuren 9 und 10 dargestellt, gerade ausgebildet ist.

Das Okularmodul kann ein Prisma 29 aufweisen, mit welchem Informationen oder andere optische Objekte, wie Infrarotstrahlen etc. in Richtung Objektiv ein oder ausgekoppelt werden können. So lassen sich durch entsprechende optische Ein bzw. Auskopplung über das Prisma 29 in Richtung des Objektivs unterschiedliche optische Funktionen, wie beispielsweise Kamera, Entfernungsmessung, Nachtsicht etc. realisieren. Die Ein- bzw. Auskoppelrichtung des Objektivs ist in Fig. 7 mit der Bezugszeichen I bezeichnet.

Über das Prisma 29 besteht auch die Möglichkeit verschiedenes in Richtung des Okulars 30 ein- bzw. auszukoppeln. Die Ein- bzw. Auskoppelrichtung des Objektivs ist in Fig. 8 mit der Bezugszeichen II bezeichnet. So kann z.B. die Anzeige eines Bildschirms, eine Zielmarke etc. in den Okularstrahlengang eingeblendet werden. Weiters kann ein Umlenkprisma 31 vorgesehen sein, um den aus dem Prisma 29 austretenden Strahl in Richtung Okular 30 umzulenken. Die Ein- und Auskopplung kann natürlich auch bei dem zweiten Prisma 31 oder auch bei beiden Prismen 29 und 31 gleichzeitig in gleicher Weise erfolgen.

Zwischen den beiden Prismen 29 und 31 kann eine Linse 32 zur Bildkorrektur vorgesehen sein. Die Linse 32 ist aber auch bei der dargestellten Ausführungsform nicht unbedingt erforderlich.

Darüber hinaus kann das erfindungsgemäße Teleskop ein Linsenumkehrsystem 33 aufweisen. Das Linsenumkehrsystem 33 kann beispielsweise zwei bewegliche Linsengruppen 34 und 35 aufweisen, die in Fig. 8 in zwei unterschiedlichen Zoomstellungen dargestellt sind. Die beweglichen Linsengruppen 34 und 35 können über ein Stellmittel zum Zoomen, beispielsweise eines der oben erwähnten Stellmittel zum Zoomen, betätigt werden kann.

Vor und nach dem Linsenumkehrsystem liegen Zwischenbildebenen. In diesem Zwischenbildebenen können Strichplatten 36 und 37 angeordnet sein.

An dieser Stelle sei erwähnt, dass die dargestellten Linsengruppen nur beispielhaft sind und nur eine von mehreren möglichen Ausführungsformen darstellen. Anstelle der Prismen könnten auch Planspiegel verwendet werden.

Gemäß Fig. 9 kann das erfindungsgemäße Teleskop auch einen geraden Aufbau aufweisen. In diesem Fall kann eine Ein- bzw. Auskopplung optischer Objekte, beispielsweise in Bildform vorliegende Informationen, oder elektromagnetische Wellen, beispielsweise aus dem Infrarotbereich, etc., in Richtung des Objektivs 24 oder des Okular 30 auch mittels eines einzigen Prismas 38 erfolgen.

Ist keine Ein- oder Auskopplung optischer Größen bzw. Objekte erforderlich, kann auch der in Fig. 10 dargestellte Aufbau ohne Prisma verwendet werden.

Die Ausführungsbeispiele zeigen lediglich mögliche Ausführungsvarianten des erfindungsgemäßen Teleskops wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend auch darauf hingewiesen, dass zum besseren Verständnis des Aufbaus des Teleskops dieses bzw. dessen Bestandteile teilweise unmaßstäblich und/oder vergrößert und/oder verkleinert dargestellt wurden.

### Bezugszeichenaufstellung

- 1: Teleskop
- 2: Objektivmodul
- 3: Okularmodul
- 4: Verbindungsschnittstelle
- 5: Verbindungsschnittstelle

- 6: Einheit zur Bildumkehr
- 7: Okular
- 8: Stellmittel
- 9: Stellmittel
- 10: Optik zum Vergrößern

- 11: Optik zum Fokussieren
- 12: Einheit zur Einblendung von Daten
- 13: Verbindungsschnittstelle
- 14: Verbindungsschnittstelle
- 15: Betätigungselement

- 16: Halteelement
- 17: Schalter
- 18: Magnet
- 19: Okularmodul
- 20: Objektivmodul

- 21: Objektivmodul
- 22: Okularmodul
- 23: Objektivmodul
- 24: Objektivmodul
- 25: Okularmodul

- 26: Glasabdeckung
- 27: Glasabdeckung
- 28: Linse
- 29: Prisma
- 30: Okular

- 31: Prisma
- 32: Linse
- 33: Linsenumkehrsystem
- 34: Linsengruppe
- 35: Linsengruppe

- 36: Strichplatte
- 37: Strichplatte
- 38: Prisma

## Patentansprüche

1. Teleskop (1), welches aus miteinander verbindbaren Modulen (2, 3, 19, 20, 21, 22, 23, 24) aufgebaut ist, wobei das Teleskop (1) zumindest aus einem Objektivmodul (2, 20, 21, 23, 24) und einem Okularmodul (3, 19, 22, 25) besteht und das Objektivmodul (2, 20, 21, 23) und das Okularmodul (3, 19, 22, 25) je eine Verbindungsschnittstelle (4, 5) zum Verbinden der Module (2, 3, 19, 20, 21, 22, 23, 24, 25) aufweisen, **dadurch gekennzeichnet, dass** in das Objektivmodul (2, 20, 21, 23, 24) eine Optik (10) zur Veränderung der Vergrößerung integriert ist.

2. Teleskop nach Anspruch 1, **dadurch gekennzeichnet, dass** es zumindest ein Stellmittel (9) zum Fokussieren und zumindest ein Stellmittel (8) zum Verändern der Vergrößerung aufweist.

3. Teleskop nach Anspruch 1 oder 2, **dadurch gekennzeichnet, dass** das zumindest eine Stellmittel (8) zum Verändern der Vergrößerung am Objektivmodul (2, 20, 21, 23, 24) oder am Okularmodul (3, 19, 22, 25) angeordnet ist.

4. Teleskop nach einem der Ansprüche 1 bis 3, **dadurch gekennzeichnet, dass** das zumindest eine Stellmittel (9) zum Fokussieren am Objektivmodul (2, 20, 21, 23, 24) oder am Okularmodul (3, 19, 22, 25) angeordnet ist.

5. Teleskop nach einem der Ansprüche 1 bis 4, **dadurch gekennzeichnet, dass** mindestens eines der Stellmittel (8, 9) im Bereich einer der Verbindungsschnittstellen (4, 5) angeordnet ist.

6. Teleskop nach einem der Ansprüche 1 bis 5, **dadurch gekennzeichnet, dass** eines der Stellmittel (8) an dem Objektivmodul (2, 20, 21, 23, 24) im Bereich der Verbindungsschnittstelle (4) des Objektivmoduls (2, 20, 21, 23, 24) und das andere der Stellmittel (9) an dem Okularmodul (3, 19, 22, 25) im Bereich der Verbindungsschnittstelle (5) des Okularmoduls (3, 19, 22, 25) angeordnet ist.

7. Teleskop nach einem der Ansprüche 1 bis 6, **dadurch gekennzeichnet, dass** die Stellmittel (8, 9) als Stellringe ausgebildet sind, deren Stirnseiten in zu einer Trenn/Verbindungsebene des Objektivmoduls (2, 20, 21, 23, 24) und des Okularmoduls (3, 19, 22, 25) parallelen Ebenen liegen.

8. Teleskop nach einem der Ansprüche 1 bis 7, **dadurch gekennzeichnet, dass** die Stellmittel (8, 9) zumindest abschnittsweise in einer Trennebene der Verbindungsschnittstellen (4, 5) liegen.

9. Teleskop nach einem der Ansprüche 1 bis 8, **dadurch gekennzeichnet, dass** durch zwei miteinander unmittelbar zusammenwirkende Verbindungsschnittstellen (4, 5,) je ein Bajonettverschluss gebildet ist.

10. Teleskop nach einem der Ansprüche 1 bis 9, **dadurch gekennzeichnet, dass** zwei unmittelbar zusammenwirkende Verbindungsschnittstellen (13, 14) eine Steckverbindung bilden, die durch axiales Verschieben lösbar ist, wobei zum Lösen zumindest ein mit zumindest einem Betätigungselement (15) zusammenwirkendes und die Verbindungsschnittstellen (13, 14) miteinander verbindendes Haltelement (16) in eine Freigabeposition zurückgedrängt ist.

11. Teleskop nach einem der Ansprüche 1 bis 10, **dadurch gekennzeichnet, dass** zwei unmittelbar miteinander zusammenwirkende Verbindungsschnittstellen (13, 14) je ein von einer flachen Form abweichendes Oberflächenprofil aufweisen, wobei eine Verbindungsschnittstelle (13, 14) zumindest abschnittsweise in Form eines männlichen Teils und die andere Schnittstelle zumindest abschnittsweise als weiblicher Teil ausgebildet ist.

12. Teleskop nach einem der Ansprüche 1 bis 11, **dadurch gekennzeichnet, dass** an zumindest einer der Verbindungsschnittstellen (4, 5) zumindest ein Schalter (17) angeordnet ist, der bei korrektem Anschließen der Verbindungsschnittstellen (4, 5) betätigt ist.

13. Teleskop nach Anspruch 12, **dadurch gekennzeichnet, dass** mehrere Schalter (17) vorgesehen sind, wobei in einem verbundenen Zustand der Verbindungsschnittstellen (4, 5) eine vorgebbare Kombination der Schalter (17) betätigt ist, wobei eine elektrische Kontaktierung zwischen dem Objektivmodul (2, 20, 21, 23) und dem Okularmodul (3, 19, 22, 25) und/oder eine Datenverbindung zwischen dem Objektivmodul (2, 20, 21, 23, 24) und dem Okularmodul (3, 19, 22, 25) erst bei Betätigung der Schalter (17) in der vorgegebenen Kombination hergestellt ist.

14. Teleskop nach Anspruch 13, **dadurch gekennzeichnet, dass** die Schalter (17) als Reed-Schaltkontakte ausgebildet sind.

15. Teleskop nach einem der Ansprüche 1 bis 14, **dadurch gekennzeichnet, dass** das Okularmodul (3, 19, 22) ein Multifunktionsmodul ist, welches weitere Funktionalitäten, insbesondere einen Entferungsmessfunktion, eine Fotofunktion, Video oder Nachtsichtfunktion aufweist.

16. Teleskop nach Anspruch 15, **dadurch gekennzeichnet, dass** die weiteren Funktionalitäten unter Verwendung des Sichtkanals des Objektivmoduls (2, 20, 21, 23, 24) realisiert sind.

17. Teleskop nach einem der Ansprüche 1 bis 16, **dadurch gekennzeichnet, dass** eine Okularoptik in das Okularmodul (3, 19, 22, 25) fix integriert ist.

18. Teleskop nach einem der Ansprüche 1 bis 17, **dadurch gekennzeichnet, dass** zwei miteinander unmittelbar zusammenwirkende Verbindungsschnittstellen (4, 5) miteinander verschraubbar sind.

19. Teleskop nach einem der Ansprüche 1 bis 18, **dadurch gekennzeichnet, dass** in das Okularmodul (3, 19, 22, 25) eine Einheit (6, 33) zur Bildumkehr integriert ist.
